# EUROPÄISCHE PATENTANMELDUNG

(11) **EP 3 150 766 A1**
(43) Veröffentlichungstag der Anmeldung: **05.04.2017**
(21) Anmeldenummer: 15198176.8
(22) Anmeldetag: 07.12.2015
(51) Int. Cl.: E01C 19/48

(54) **SELBSTFAHRENDE MASCHINE UND POSITIONIERVORRICHTUNG FÜR EINE BEDIENER-ARMATURENEINHEIT EINER SELBSTFAHRENDEN MASCHINE**

(30) Priorität: 02.10.2015 EP 15188230
(71) Anmelder: Ammann Schweiz AG, 4901 Langenthal (CH)
(72) Erfinder: Declercq, Benjamin, 4053 Basel (CH); Truffer, Samuel, 3920 Zermatt (CH)
(74) Vertreter: Dittmann, Rolf

(57) **Zusammenfassung**

Beschrieben ist eine selbstfahrende Maschine (1) zum Fördern und/oder zum Einbau eines Belagsmaterials, insbesondere ein Strassenfertiger oder ein Beschicker, umfassend eine verstellbare Positioniervorrichtung (130) für eine Bediener-Armatureneinheit (125), wobei die Positioniervorrichtung wenigstens ein Grundelement (131) und wenigstens zwei Auslegerarme (132, 133) umfasst, wobei ein erster Auslegerarm (132) zwei Gelenkpositionen aufweist, die voneinander beabstandet sind, und wobei der erste Auslegerarm an einer ersten Gelenkposition an einem Grundelement angelenkt ist, wobei ein zweiter Auslegerarm (133) an der zweiten Gelenkposition des ersten Auslegerarms an dem ersten Auslegerarm angelenkt ist, derart, dass der erste Auslegerarm relativ zu dem Grundelement um wenigstens eine erste Gelenkachse (151) schwenkbar ist und der zweite Auslegerarm relativ zu dem ersten Auslegerarm um wenigstens eine zweite Gelenkachse (152) schwenkbar ist.

## Beschreibung

### TECHNISCHES GEBIET

Die vorliegende Beschreibung betrifft eine selbstfahrende Maschine zum Fördern und/oder zum Einbau eines Belagsmaterials der im Anspruch 1 beschriebenen Art. Sie betrifft weiterhin eine Positioniervorrichtung für eine Bediener-Armatureneinheit an einer selbstfahrenden Maschine zum Fördern und/oder zum Einbau eines Belagsmaterials.

Die selbstfahrende Maschine ist insbesondere ein Strassenfertiger oder ein Beschicker.

### TECHNOLOGISCHER HINTERGRUND

Bei Strassenfertigern ist üblicherweise vorgesehen, dass ein Bedienerplatz auf einem Hauptbedienstand, der auf der Zugmaschine des Strassenfertigers angeordnet ist, variabel gewählt werden kann. Bekannt ist, dass ein Bedienerplatz an zumindest zwei unterschiedlichen Positionen des Hauptbedienstandes angeordnet sein oder angeordnet werden kann. Diese Positionen sind insbesondere rechts und links aussen, bezogen auf eine Hauptfahrtrichtung des Strassenfertigers, angeordnet. Dabei kann vorgesehen sein, dass ein Bedienerplatz quer zur Fahrtrichtung des Strassenfertigers verschoben und wenigstens an einer rechten und linken Seite des Strassenfertigers positioniert werden kann. Es sind auch Strassenfertiger bekannt, bei denen jeweils ein Bedienerplatz an der rechten und der linken Seite des Hauptbedienstandes angeordnet ist. Weiterhin ist bei Strassenfertigern vorgesehen, dass ein Bedienerplatz um einen Drehpunkt seitlich vom Hauptbedienstand ausgeschwenkt werden kann, derart, dass der Bedienerplatz seitlich von dem Strassenfetiger auskragt. Dies ermöglicht eine verbesserte Übersicht für den Bediener beim Belageinbau. Beim Ausschwenken des Bedienerplatzes wird dieser insbesondere um eine vor einem Bedienersitz liegende Achse verschwenkt.

Damit der Bediener auf dem Hauptbedienstand jeweils einen ergonomisch guten Zugang zu einer Bediener-Armatureneinheit hat, ist es wünschenswert, die Bediener-Armatureneinheit jeweils zum Bediener hin schwenken und ausrichten zu können.

Der Bedienersitz ist dabei häufig nicht in der Arbeitsrichtung des Bedieners, also in der Richtung, die vor dem Bediener, der auf dem Bedienersitz sitzt, längsverstellbar. Der Bediener kann weiterhin sowohl auf dem Bedienersitz sitzen, als auch vor dem Bedienersitz stehen. Es ist daher ergonomisch wünschenswert, wenn die Bediener-Armatureneinheit in einem Neigungswinkel verstellbar sowie in einer Ebene vordem Bediener frei positionierbar, ist.

Eine stets ergonomisch günstige Platzierbarkeit der Bediener-Armatureneinheit, die eine gute Sichtbarkeit und Zugänglichkeit der Bediener-Armaturen und eine gute Ablesbarkeit von Anzeigen unabhängig von der tatsächlichen Position des Benutzers, aber auch dessen Grösse und Körperbau, garantiert, erhöht den Bedienkomfort wie auch die Bediensicherheit, vermindert die Ermüdung, und hat somit einen positiven Einfluss auf das Arbeitsergebnis wie auch die Vermeidung von Unfällen.

Diese Aussagen treffen auch für andere Arten selbstfahrender Maschinen zum Fördern und/oder zum Einbau eines Belagsmaterials, beispielsweise Beschicker, zu. Es stellen sich die gleichen Anforderungen für die Positionierbarkeit und die Ausrichtbarkeit einer Bediener-Armatureneinheit.

Aus EP 2 650 437 ist eine Positioniervorrichtung für eine Bediener-Armatureneinheit bekanntgeworden, welche eine translatorische Verschieblichkeit der Bediener-Armatureneinheit quer zur Arbeitsrichtung eines Strassenfertigers erlaubt.

Aus EP 2 650 440 ist einer Positioniervorrichtung für eine Bediener-Armatureneinheit bekanntgeworden, die ein seitliches Schwenken der Bediener-Armatureneinheit erlaubt.

### DARSTELLUNG DES GEGENSTANDES DER VORLIEGENDEN BESCHREIBUNG

Beschrieben werden eine selbstfahrende Maschine zum Fördern und/oder zum Einbau eines Belagsmaterials der eingangs genannten Art, insbesondere ein Strassenfertiger oder ein Beschicker, umfassend eine Positioniervorrichtung für eine Bediener-Armatureneinheit. Weiterhin beschrieben ist eine Positioniervorrichtung für eine Bediener-Armatureneinheit einer selbstfahrenden Maschine zum Fördern und/oder zum Einbau eines Belagsmaterials. Gemäss einem Aspekt der vorliegend beschriebenen Gegenstände soll es ermöglicht sein, dass der Bediener die Bediener-Armatureneinheit stets an einer für ihn günstigen Position vor dem Bedienerplatz positionieren und insbesondere auch festsetzen kann. Es soll gemäss weiterer Aspekte ermöglicht sein, dass der Bediener eine Neigung der Bediener-Armatureneinheit so einstellen kann, dass er stets eine gute Sicht auf die Bediener-Armatureneinheit hat.

Weitere Wirkungen und Vorteile der hier beschriebenen Gegenstände, ob explizit angegeben oder nicht, ergeben sich im Lichte der vorliegenden Beschreibung.

Dies wird mittels des im Anspruch 1 beschriebenen Gegenstandes sowie der weiterhin beschriebenen Positioniervorrichtung erreicht.

Beschrieben ist demnach eine selbstfahrende Maschine zum Fördern und/oder zum Einbau eines Belagsmaterials, insbesondere ein Strassenfertiger oder ein Beschicker, die eine verstellbare Positioniervorrichtung für eine Bediener-Armatureneinheit umfasst. Die Positioniervorrichtung umfasst wenigstens ein Grundelement und wenigstens zwei Auslegerarme, wobei ein erster Auslegerarm zwei Gelenkpositionen aufweist, die voneinander beabstandet sind, und wobei der erste Auslegerarm an einer ersten Gelenkposition an einem Grundelement angelenkt ist und ein zweiter Auslegerarm an der zweiten Gelenkposition des ersten Auslegerarms an dem ersten Auslegerarm angelenkt ist. Derart ist der erste Auslegerarm relativ zu dem Grundelement um wenigstens eine erste Gelenkachse schwenkbar, und der zweite Auslegerarm ist relativ zu dem ersten Auslegerarm um wenigstens eine zweite Gelenkachse schwenkbar. Auf diese Weise kann eine an dem zweiten Auslegerarm auf geeignete Weise gehalterte Bediener-Armatureneinheit innerhalb eines Kreissegments oder eines Kreisringsegments, das sich um die erste Gelenkachse erstreckt, zumindest im Wesentlichen an jeder Stelle angeordnet werden.

"Ein" oder "eine" sind im Rahmen der vorliegenden Beschreibung als unbestimmte Artikel und nicht als Zahlwort zu verstehen, sofern nicht explizit auf eine andere Bedeutung, beispielsweise durch die Verwendung von "genau ein" oder "genau eine", hingewiesen wird.

Gemäss einem Aspekt des vorliegend beschriebenen Gegenstandes sind die erste und die zweite Gelenkachse wenigstens näherungsweise parallel zueinander angeordnet. Gemäss einem weiteren Aspekt des vorliegend beschriebenen Gegenstandes ist wenigstens eine der ersten und zweiten Gelenksachsen wenigstens näherungsweise senkrecht, bezogen auf die Arbeitsposition der selbstfahrenden Maschine, angeordnet. Insbesondere sind in bestimmten Ausführungsformen die erste und die zweite Gelenkachse zumindest näherungsweise senkrecht, bezogen auf die Arbeitsposition der selbstfahrenden Maschine, angeordnet. Hieraus resultiert, dass eine an dem zweiten Auslegerarm gehalterte Bediener-Armatureneinheit in einer waagerecht liegenden Ebene verstellbar ist. Es ist für den Fachmann insofern ohne weiteres nachvollziehbar, dass unter der Arbeitsposition der selbstfahrenden Maschine deren Position bezogen auf einen waagerechten Untergrund zu verstehen ist.

Gemäss einem Aspekt der vorliegend beschriebenen Gegenstände umfasst die Positioniervorrichtung genau einen ersten Auslegerarm und genau einen zweiten Auslegerarm.

Es soll gemäss weiterer Aspekte ermöglicht sein, dass der Bediener die Neigung der Bediener-Armatureneinheit so einstellen kann, dass er stets eine gute Sicht auf die Bediener-Armatureneinheit hat. Es soll gemäss eines weiteren spezifischen Aspekts ermöglicht sein, dass der Bediener die Ausrichtung der Bediener-Armatureneinheit quer zur Fahrtrichtung der selbstfahrenden Maschine einstellen kann.

An dem zweiten Auslegerarm kann, insbesondere von der zweiten Gelenkachse beabstandet, eine Halterungsvorrichtung für eine Bediener-Armatureneinheit angeordnet sein. In bestimmten Ausführungsformen ist die Halterungsvorrichtung an einem Ende des zweiten Auslegerarms an diesem angeordnet, das von der zweiten Gelenkachse beabstandet ist.

In beispielhaften Ausführungsformen umfasst die Halterungsvorrichtung wenigstens ein Gelenk, das eine Verschwenkung einer darauf angeordneten Bediener-Armatureneinheit um eine Kippachse ermöglicht, die insbesondere wenigstens näherungsweise senkrecht zu wenigstens einer der ersten und zweiten Gelenkachsen angeordnet ist. In weiterhin spezifischeren Ausführungsformen ist die Kippachse wenigstens näherungsweise waagerecht, wiederum bezogen auf die Arbeitsposition der selbstfahrenden Maschine, angeordnet. Damit ist es ermöglicht, dass ein Bediener den Neigungswinkel der Bediener-Armatureneinheit einstellen kann, derart, dass er einen günstigen und insbesondere auch blendfreien Blickwinkel auf die Bediener-Armatureneinheit hat, sowie eine gute Erreichbarkeit von auf der Bediener-Armatureneinheit angeordneten Bedienelementen gewährleistet ist. Es kann sich als zweckmässig erweisen, wenn die Halterungsvorrichtung eine Grundeinheit umfasst, welche an dem zweiten Auslegerarm angeordnet ist, sowie eine darauf angeordnete und mit der Grundeinheit gelenkig verbundene Aufnahmevorrichtung. Die Aufnahmevorrichtung ist über die gelenkige Verbindung um die genannte Kippachse relativ zur Grundeinheit verschwenkbar. An der Aufnahmevorrichtung ist die Bediener-Armatureneinheit befestigbar. Beispielsweise kann die Aufnahmevorrichtung einen Rastmechanismus umfassen, an dem die Bediener-Armatureneinheit eingerastet werden kann, wobei durch Bedienen eines geeigneten Bedienungsmittels die Rasterung gelöst werden und die Bediener-Armatureneinheit abgenommen werden kann. In anderen beispielhaften Ausführungsformen ist die Bediener-Armatureneinheit fest mit der Aufnahmevorrichtung verbunden, beispielsweise angeschraubt. Es kann ein Mittel angeordnet sein, welches den Neigungswinkel der Bediener-Armatureneinheit fixiert, und das ebenfalls durch Betätigung eines geeigneten Bedienungsmittels lösbar ist, dergestalt, dass bei Betätigung des Bedienungsmittels die Neigung der Bediener-Armatureneinheit vom Bediener einstellbar ist. Derart ist ein Drehfreiheitsgrad um die Kippachse wahlweise festsetzbar und lösbar. Der Fachmann vollzieht ohne weiteres nach, dass lösbar in diesem Falle bedeutet, dass ein festgesetzter Drehfreiheitsgrad wieder freigegeben werden kann.

Es kann weiterhin vorgesehen sein, dass die Halterungsvorrichtung gelenkig an dem zweiten Auslegerarm gelagert ist. Es wäre somit eine gleichzeitige Dreh- wie auch Translationsbewegung der Bediener-Armatureneinheit unabhängig voneinander ermöglicht. Weiterhin ist eine optionale weitere Gelenkachse, um die die Halterungsvorrichtung an dem zweiten Auslegerarm schwenkbar ist, insbesondere wenigstens näherungsweise parallel zu wenigstens einer der ersten und zweiten Gelenksachsen angeordnet. Weiterhin kann vorgesehen sein, dass die genannte optionale weitere Gelenkachse, um die die Halterungsvorrichtung relativ zu dem zweiten Auslegerarm verschwenkbar ist, wenigstens näherungsweise senkrecht, bezogen auf die Arbeitsposition der selbstfahrenden Maschine, angeordnet ist. Dies ermöglicht es, die Bediener-Armatureneinheit seitlich und relativ zu dem zweiten Auslegerarm um eine Hochachse des Fertigers, zu verschwenken. Damit ist es möglich, dass der Bediener die Bediener-Armatureneinheit unabhängig von der Orientierung des zweiten Auslegerarms und unabhängig von der Position der Bediener-Armatureneinheit stets in einer für ihn günstigen Orientierung ausrichten kann. Auf diese Weise ist es ermöglicht, die Position der Bediener-Armatureneinheit und deren Ausrichtung in Querrichtung des Fertigers unabhängig voneinander zu justieren.

Gemäss einem weiteren Aspekt der vorliegend beschriebenen Gegenstände ist wenigstens einer der Drehfreiheitsgrade um die erste Gelenkachse und/oder um die zweite Gelenkachse wahlweise festsetzbar und lösbar. Es kann vorgesehen sein, dass der Drehfreiheitsgrad um die erste Gelenkachse und der Drehfreiheitsgrad um die zweite Gelenkachse simultan festsetzbar und lösbar sind. Insbesondere kann vorgesehen sein, dass der Drehfreiheitsgrad um die erste Gelenkachse und der Drehfreiheitsgrad und die zweite Gelenkachse mittels Betätigung eines einzigen vom Bediener zu betätigenden Betätigungselementes festsetzbar und lösbar sind. Dabei ist beispielsweise vorgesehen, dass die Drehfreiheitsgrade oder wenigstens einer der Drehfreiheitsgrade passiv, das heisst ohne Betätigung eines Betätigungselementes, festgesetzt sind, derart, dass die zueinander verschwenkbar angeordneten und aneinander angelenkten Bauelemente in ihrer Lage zueinander fixiert sind, wenn das Betätigungselement nicht betätigt wird. Hingegen wird eine Drehung um die entsprechende Gelenkachse oder die entsprechenden Gelenkachsen bei Betätigen eines entsprechend vorgesehenen Betätigungselementes ermöglicht. Auf diese Weise kann ein Bediener durch Betätigen eines Betätigungselementes eine Bediener-Armatureneinheit in einer für ihn günstige Position und Ausrichtung anordnen. Nach Loslassen des Betätigungselementes ist die Bediener-Armatureneinheit in der gewählten Position und Ausrichtung fixiert.

Es sind somit Ausführungsformen der beschriebenen Gegenstände offenbart, bei denen wenigstens ein Drehfreiheitsgrad, der durch eine der Gelenkachsen bereitgestellt ist, passiv blockiert oder festgesetzt ist, wobei die Blockierung durch einen aktiven Eingriff aufgehoben und somit ein Drehfreiheitsgrad freigegeben werden kann. Die Betätigung ist derart vorgesehen, dass nach Beenden der Betätigung die Vorrichtung wieder in einen Zustand zurückkehrt, in dem der Drehfreiheitsgrad festgesetzt ist. In einem passiven Zustand, in dem keine Betätigung eines Betätigungselements erfolgt, ist demnach eine Schwenkbewegung um eine Gelenkachse unterbunden. Bei aktiver Betätigung eines Betätigungselements wird die Schwenkbewegung freigegeben. Insbesondere kann das wenigstens eine Betätigungselement zum Lösen oder Freigeben von Drehfreiheitsgraden als Einhand-Betätigungselement ausgeführt sein. In spezifischeren Ausführungsformen ist eine Betätigungsanodnung derart bereitgestellt, dass durch Betätigen eines einzigen Betätigungselements die Drehfreiheitsgrade um die erste und die zweite Gelenkachse gleichzeitig freigegeben werden. Es ist somit eine gleichzeitige Dreh- wie auch Translationsbewegung der Bediener-Armatureneinheit unabhängig voneinander ermöglicht. Im unbetätigten Zustand der entsprechenden Betätigungselemente bzw. des Betätigungselements ist demnach die Position der Bediener-Armatureneinheit fixiert. Das wenigstens eine Betätigungselement kann insbesondere an der Halterungsvorrichtung angeordnet sein. Dies ermöglicht eine besonders gute Zugänglichkeit und Handhabbarkeit durch den Bediener.

Es kann hierzu vorgesehen sein, dass das Grundelement und der erste Auslegerarm sowie der erste Auslegerarm und der zweite Auslegerarm jeweils mittels wenigstens eines längenvariablen Elementes miteinander gekoppelt sind.

Ein Anlenkpunkt wenigstens eines ersten längenvariablen Elements an dem Grundelement ist von einem Anlenkpunkt des ersten Auslegerarms am Grundelement beabstandet ist. Das erste längenvariable Element ist dabei weiterhin am ersten Auslegerarm angelenkt, wobei ein Anlenkpunkt am ersten Auslegerarm vom Anlenkpunkt des ersten Auslegerarms am Grundelement beabstandet ist. Damit resultiert aus einer Schwenkbewegung des ersten Auslegerarms relativ zum Grundelement eine Längenänderung des ersten längenvariablen Elements. Ein Anlenkpunkt wenigstens eines zweiten längenvariablen Elements an dem ersten Auslegerarm ist von der zweiten Gelenkposition des ersten Auslegerarms beabstandet. Das zweite längenvariable Element ist dabei weiterhin am zweiten Auslegerarm angelenkt, wobei ein Anlenkpunkt am zweiten Auslegerarm vom Anlenkpunkt des zweiten Auslegerarms am ersten Auslegerarm beabstandet ist. Damit resultiert aus einer Schwenkbewegung des zweiten Auslegerarms relativ zum ersten Auslegerarm eine Längenänderung dieses längenvariablen Elements. Insbesondere kann vorgesehen sein, dass die Länge wenigstens eines der längenvariablen Elemente, und weiterhin insbesondere beider längenvariablen Elemente, festsetzbar ist. Durch das Festsetzen oder Fixieren der Länge eines längenvariablen Elements ist damit ein Drehfreiheitsgrad festgesetzt. Wie oben dargelegt, kann eine Betätigungsanordnung vorgesehen sein, welche es durch Betätigen eines einzigen Betätigungselements ermöglicht, die Längenvariabilität beider längenvariablen Elemente wahlweise festzusetzen oder freizugeben. Dabei kann weiterhin vorgesehen sein, dass in einem passiven, unbetätigten Zustand der Betätigungsanordnung die Länge beider längenvariablen Elemente festgesetzt ist, und auf diese Weise der Drehfreiheitsgrad um die erste Gelenkachse und um die zweite Gelenkachse festgesetzt ist. Durch Betätigen eines Betätigungselements kann über die Betätigungsanordnung die Längenvariabilität der längenvariablen Elemente und damit die entsprechenden Drehfreiheitsgrade freigegeben werden.

Zum Freigeben und/oder Festsetzen eines Drehfreiheitsgrades sind insbesondere entsprechende Mittel zur Kraftübertragung zwischen dem Betätigungselement bzw. den Betätigungselementen und den Mitteln, welche das selektive Festsetzen und Freigeben eines Drehfreiheitsgrades bewirken - also beispielsweise den längenvariablen Elementen - vorgesehen. Die genannten Mittel zur Kraftübertragung sind in einer Ausführungsform Bowdenzüge. Insbesondere kann vorgesehen sein, dass zwei Bowdenzüge oder ein gegabelter Bowdenzug von einem einzigen Betätigungselement aus betätigt werden, womit die genannte Einhandbedienung zum gleichzeitigen Freigeben beider Drehfreiheitsgrade realisiert ist. Es kann in anderen Ausführungsformen eine hydraulische Betätigung der entsprechenden Mittel, welche das selektive Festsetzen und Freigeben eines Drehfreiheitsgrades bewirken, vorgesehen sein, ähnlich beispielsweise einer hydraulischen Brems- oder Kupplungsbetätigung. In weiteren Ausführungsformen kann eine elektrische oder elektromechanische Betätigung vorgesehen sein, wobei diese Aufzählung möglicher Mittel zur Kraftübertragung in keinem Falle abschliessend zu verstehen ist. In jedem Falle ist es möglich, dass die Mittel zur Kraftübertragung derart angeordnet und vorgesehen sind, dass eine gleichzeitige Betätigung wenigstens zweier Mittel, welche das selektive Festsetzen und Freigeben eines Drehfreiheitsgrades bewirken, durch Betätigung eines einzigen Betätigungselements ermöglicht ist. Weiterhin kann vorgesehen sein, dass die Mittel, welche das selektive Festsetzen und Freigeben eines Drehfreiheitsgrades bewirken, beispielsweise durch Federbelastung oder pneumatische Belastung, selbsttätig in den Zustand zurückkehren, in dem der jeweilige Drehfreiheitsgrad festgesetzt ist, sobald die Betätigungsanordnung nicht aktiv vom Bediener betätigt wird.

Die längenvariablen Elemente sind gemäss weiterer Aspekte der vorliegend beschriebenen Gegenstände als Teleskopelemente ausgeführt. In spezifischeren Ausführungsformen finden Gasdruckelemente Verwendung. Es kann vorgesehen sein, dass die Gasdruckelemente in der Relativbewegung von Kolbenstange und Kolben und damit hinsichtlich ihrer Längenvariabilität blockierbar sind. Dabei ist in einer Ausführungsform ein Entriegelungsmechanismus für die Relativbeweglichkeit von Kolben und Kolbenstange einer jeden der beiden Gasdruckfedern über einen Bowdenzug betätigbar. Beide Bowdenzüge sind insbesondere gemeinsam mit einem einzigen Betätigungselement verbunden. Ebenso sind, wie oben dargestellt, auch andere Arten von Betätigungsmechanismen möglich, beispielsweise eine hydraulische Betätigung.

Es ist vorgesehen, diese Betätigungsanordnung derart auszuführen, dass in einem passiven Zustand, in dem das Betätigungselement nicht betätigt ist, der Hub der Gasdruckelemente blockiert ist und die Längenvariabilität beider Gasdruckfedern bei Betätigen eines Betätigungselementes insbesondere gleichzeitig freigegeben wird.

Insbesondere kann vorgesehen sein, dass alle Gelenke, mit denen die Auslegerarme miteinander bzw. mit dem Grundelement verbunden sind, mit genau einer Drehachse ausgeführt sind.

In weiteren Ausführungsformen ist vorgesehen, dass das Grundelement, an dem der erste Auslegerarm angelenkt ist, quer zur Fahrtrichtung des Strassenfertigers verschieblich angeordnet und gelagert ist. Dabei kann vorgesehen sein, dass das Grundelement an einer Quertraverse eines Führerstandes der selbstfahrenden Maschine gelagert ist. Es kann vorgesehen sein, dass das Grundelement zwischen einer am weitesten rechts und einer am weitesten links liegenden Position verschieblich ist, wobei diese Positionen derart vorgesehen sind, dass eine auf der Positioniervorrichtung angeordnete Bediener-Armatureneinheit zu einem rechts und einem links angeordneten Bedienerplatz in der beschriebenen Weise günstig positionierbar ist. Es kann vorgesehen sein, dass in den am weitesten rechts und am weitesten links liegenden Positionen in der Projektion auf eine waagerecht liegende Ebene jeweils eine der ersten und zweiten Gelenkachsen mit der Drehachse des entsprechenden Bedienerplatzes, um die der Bedienerplatz auf dem Führerstand drehbar ist, wenigstens näherungsweise in Übereinstimmung ist. Dies ermöglicht es, die Bediener-Armatureneinheit koaxial mit dem Bedienerplatz zu verschwenken und auf einfache Weise eine einmal gewählte günstige Position beim Verschwenken des Sitzes beizubehalten. Daraus resultiert, dass eine Verschwenkung der Positioniervorrichtung relativ zum Grundelement um eine der ersten und zweiten Gelenkachsen konzentrisch mit der Schwenkbewegung des Bedienerplatzes stattfindet. Es kann weiterhin vorgesehen sein, dass das Grundelement zwischen der am weitesten rechts und am weitesten links liegenden Position verschieblich und an diesen beiden Positionen festsetzbar ist. Das Grundelement ist beispielsweise mittels eines Umlauflagers an der Quertraverse des Führerstandes gelagert und geführt.

Gemäss einem weiteren Aspekt der vorliegenden Beschreibung ist eine Positioniervorrichtung für eine Bediener-Armatureneinheit an einer selbstfahrenden Maschine zum Fördern und/oder zum Einbau eines Belagsmaterials, insbesondere an einem Strassenfertiger oder Beschicker, offenbart, welche die eine Positioniervorrichtung betreffenden Merkmale wenigstens einer der oben beschriebenen Ausgestaltungen umfasst.

Insbesondere ist eine Positioniervorrichtung für eine Bediener-Armatureneinheit einer selbstfahrenden Maschine zum Fördern und/oder zum Einbau eines Belagsmaterials offenbart, welche umfasst:
eine Traverse,
ein Grundelement,
einen ersten Auslegerarm,
einen zweiten Auslegerarm,
eine Halterungsvorrichtung,
wobei das Grundelement translatorisch verschiebbar an der Traverse angeordnet und gelagert ist, der erste Auslegerarm um eine erste Gelenkachse drehbar an dem Grundelement angeordnet und gelagert ist, der zweite Auslegerarm um eine zweite Gelenkachse drehbar an dem ersten Auslegerarm angeordnet und gelagert ist, und die Halterungsvorrichtung von der zweiten Gelenkachse beabstandet an dem zweiten Auslegerarm angeordnet ist.

Die Positioniervorrichtung weist demnach eine Z-förmige Konfiguration auf, wobei an den Punkten, an denen die Schenkel des Z zusammentreffen, Gelenke angeordnet sind.

In einer Ausführungsform der Positioniervorrichtung umfasst diese genau eine Traverse. Die Positioniervorrichtung kann genau ein Grundelement umfassen. Die Positioniervorrichtung kann genau einen ersten Auslegerarm umfassen. Die Positioniervorrichtung kann genau einen zweiten Auslegerarm umfassen.

Die Halterungsvorrichtung kann bereitgestellt sein, um eine Bediener-Armatureneinheit lösbar oder fest aufzunehmen, und weiterhin eine Kippbewegung der Bediener-Armatureneinheit um eine Kippachse zu ermöglichen, die wenigstens näherungsweise senkrecht zu den ersten und/oder zweiten Gelenkachsen angeordnet ist.

Es kann vorgesehen sein, dass wenigstens die Drehbarkeit um die erste und die zweite Gelenkachse festsetzbar sind. Dies kann beispielsweise auf die oben beschriebene Weise mittels längenvariabler Elemente erfolgen, die eine Kopplung zwischen dem Grundelement und dem ersten Auslegerarm sowie dem ersten Auslegerarm und dem zweiten Auslegerarm herstellen, wobei die Längenvariabilität der längenvariablen Elemente insbesondere festsetzbar ist. Es kann weiterhin eine Betätigungsanordnung der oben beschriebenen Art vorgesehen sein, welche es ermöglicht, die Drehbarkeit um beide Gelenkachsen gleichzeitig durch Betätigen eines einzigen Betätigungselementes freizugeben. Dabei kann, wie ebenfalls oben dargelegt, vorgesehen sein, dass in einem passiven unbetätigten Zustand die Drehbarkeit um beide Gelenkachsen festgesetzt ist, und weiterhin insbesondere, dass die Mittel, welche ein selektives Festsetzen und Freigeben der Drehbarkeit bewirken, derart ausgeführt sind, dass sie nach Beendigung der Bedienung selbsttätig in einen Zustand zurückkehren, in dem die Drehbarkeit festgesetzt ist.

Die oben dargestellten Ausgestaltungen der beschriebenen Gegenstände können selbstverständlich untereinander kombiniert werden. Weitere, nicht spezifisch offenbarte Ausführungsformen der Lehre dieses Dokumentes erschliessen sich dem Fachmann ohne Weiteres.

### KURZE BESCHREIBUNG DER FIGUREN

Die hier dargelegten Sachverhalte werden nachfolgend anhand ausgewählter in der Zeichnung dargestellter Ausführungsbeispiele näher erläutert. Im Einzelnen zeigen
- Fig. 1: eine schematische Draufsicht eines Strassenfertigers;
- Fig. 2: eine Ansicht einer an einer Quertraverse des Führerstandes einer selbstfahrenden Maschine der eingangs genannten Art angeordneten Positioniervorrichtung mit einer daran gehalterten Bediener-Armatureneinheit in einer ersten Perspektive;
- Fig. 3: eine Ansicht einer an einer Quertraverse des Führerstandes einer selbstfahrenden Maschine der eingangs genannten Art angeordneten Positioniervorrichtung mit einer daran gehalterten Bediener-Armatureneinheit in einer zweiten Perspektive;
- Fig. 4: eine Detailansicht einer Positioniervorrichtung;
- Fig. 5: eine erste Anordnung einer Positioniervorrichtung auf dem Führerstand einer selbstfahrenden Maschine;
- Fig. 6: eine zweite Anordnung einer Positioniervorrichtung auf dem Führerstand einer selbstfahrenden Maschine;

Die Zeichnungen sind stark schematisiert. Nicht für das Verständnis der beschriebenen Gegenstände notwendige Einzelheiten sind weggelassen worden. Weiterhin zeigen die Zeichnungen nur ausgewählte Ausführungsbeispiele und dürfen nicht zur Einschränkung der in den Ansprüchen umschriebenen Gegenstände herangezogen werden. Nicht gezeigte Ausführungsformen können durchaus von den Ansprüchen abgedeckt sein.

### AUSFÜHRUNGSBEISPIELE

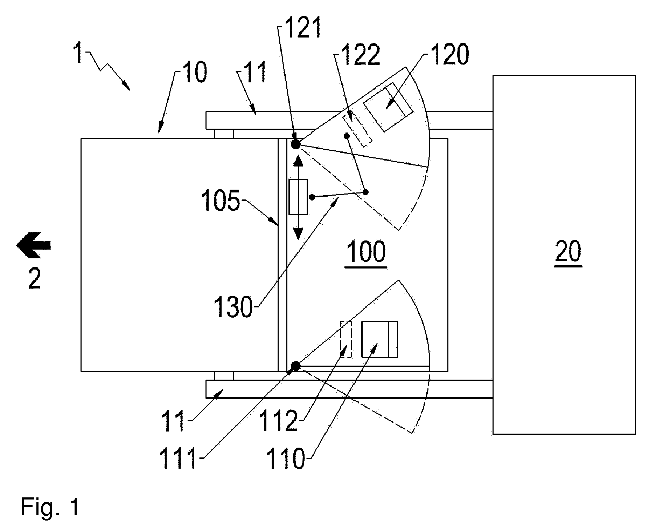

In der Figur 1 ist ein Strassenfertiger 1 als Beispiel für eine selbstfahrende Maschine zum Fördern und/oder zum Einbau eines Belagsmaterials in einer Draufsicht dargestellt. Der Strassenfertiger umfasst eine Zugmaschine 10 und eine Bohle 20, welche mittels Zugarmen 11 mit der Zugmaschine verbunden ist. Beim Einbau eines Belagmaterials wird die Bohle hinter der Zugmaschine geschleppt. Die Einbau- oder Vorwärtsfahrtrichtung des Strassenfertigers ist durch den Pfeil 2 gekennzeichnet. Auf der Zugmaschine 10 ist ein Führerstand 100 angeordnet. Auf dem Führerstand 100 befinden sich zwei Bedienerplätze 110 und 120. Die Bedienerplätze 110 und 120 sind um Schwenkachsen 111 und 121 drehbar auf dem Führerstand angeordnet. Dadurch kann ein Bedienerplatz vom Führerstand ausgeschwenkt und seitlich von der Zugmaschine auskragend angeordnet werden. Der Bedienerplatz 110 auf der linken Seite des Strassenfertigers ist im eingeschwenkten Zustand dargestellt, während der Bedienerplatz 120 auf der rechten Seite des Strassenfertigers in einem teilweise ausgeschwenkten Zustand dargestellt ist. Ein Bediener auf dem Führerstand 100 kann den links angeordneten Platz 110 oder den rechts angeordneten Platz 120 wählen, so, dass er für eine gerade auszuführende Arbeit oder für eine Verschiebefahrt die günstigste Sicht hat. Durch Ausschwenken eines Bedienerplatzes erhält der Bediener eine verbesserte Sicht auf das Arbeitsareal. Eine Bediener-Armatureneinheit sollte dabei derart angeordnet sein, dass eine gute Sicht und Zugänglichkeit für den Bediener ermöglicht ist. Eine beispielhafte günstige Position für eine Bediener-Armatureneinheit für den eingeschwenkten, linken Bedienerplatz 110 ist bei 112 angedeutet. Eine beispielhafte günstige Position für eine Bediener-Armatureneinheit für den ausgeschwenkten rechten Bedienerplatz 120 ist bei 122 angedeutet. Es ist ersichtlich, dass die Bediener-Armatureneinheit, wenn sie günstig zum ausgeschwenkten rechten Bedienerplatz positioniert ist, auch eine Ausrichtung zur Seite des Strassenfertigers hin aufweist. Es versteht sich, dass sich beim Verschwenken eines Bedienerplatzes um die jeweilige Achse 111 und 121 die gewünschte Position der Bediener-Armatureneinheit ändert. Es ist demnach wünschenswert, wenn die Bediener-Armatureneinheit an verschiedenen Orten auf dem Führerstand positioniert werden kann. Zusätzlich kann es wünschenswert sein, dass auch eine Neigung der Bediener-Armatureneinheit zur Waagerechten verstellbar ist. An einer Quertraverse 105 am Führerstand des Strassenfertigers ist hierzu eine Positionierungsvorrichtung 130 querverschieblich angeordnet, die nachfolgend näher beschrieben wird.

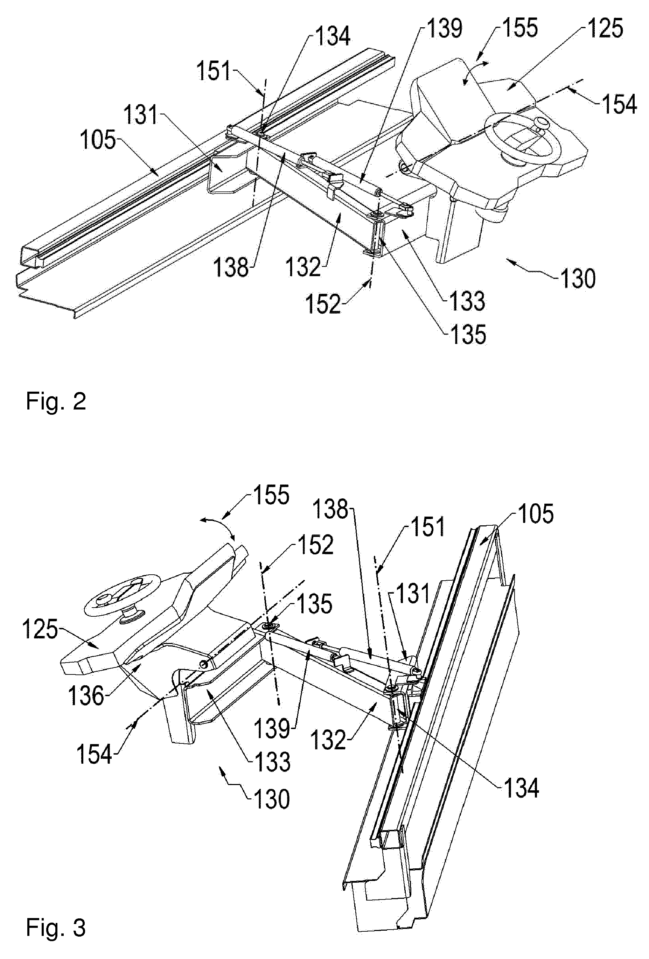

In der Figur 2 ist eine Bediener-Armatureneinheit 125 gezeigt, die mittels einer Positioniervorrichtung 130 an der Quertraverse 105 angeordnet ist. Die Positioniervorrichtung 130 umfasst ein Grundelement 131, dass entlang der Quertraverse 105 verschieblich ist. Ein erster Auslegerarm 132 ist mittels einem ersten Gelenk 134 mit dem Grundelement 131 verbunden und um eine erste Gelenkachse 151 relativ zu dem Grundelement verschwenkbar. Mittels eines zweiten Gelenks 135 ist ein zweiter Auslegerarm 133 um eine zweite Gelenkachse 152 verschwenkbar mit dem ersten Auslegerarm 132 verbunden. Die Bediener-Armatureneinheit 125 ist auf einer in der vorliegenden Darstellung nicht sichtbaren Halterungsvorrichtung gehaltert, die von der zweiten Gelenkachse beabstandet an dem zweiten Auslegerarm 133 angeordnet ist. Dabei kann die Halterungsvorrichtung optional um eine weitere Gelenkachse verschwenkbar mit dem zweiten Auslegerarm 133 verbunden sein, wobei diese Gelenkachse insbesondere parallel zu wenigstens einer der Gelenkachsen 151 und 152 angeordnet wäre. Die Gelenkachsen 151 und 152 sind zumindest näherungsweise parallel zueinander und, bezogen auf die Arbeitsposition des Strassenfertigers, zumindest im Wesentlichen senkrecht angeordnet. Die Halterungsvorrichtung ist derart ausgeführt, dass die Bediener-Armatureneinheit zusätzlich um eine Kippachse 154 schwenkbar ist, wobei sie eine durch 155 gekennzeichnete Kippbewegung ausführt. Die Kippachse 154 ist zumindest näherungsweise senkrecht zu den Gelenkachsen 151 und 152, und somit insbesondere zumindest im Wesentlichen waagerecht, bezogen auf die Arbeitsposition des Fertigers. Aufgrund dieser Anordnung ist die Bediener-Armatureneinheit in einer waagerechten Ebene frei positionierbar. Die Drehbarkeit um die Kippachse 154 ermöglicht es, die Neigung der Bediener-Armatureneinheit einzustellen.

Diese Anordnung ist in der Figur 3 nochmals aus einer anderen Perspektive dargestellt. Hierbei ist die Halterungsvorrichtung 136 zu erkennen.

Der erste Auslegerarm 132 ist weiterhin mittels eines als Teleskopelement ausgeführten längenvariablen Elements 138 mit dem Grundelement 131 gekoppelt. Dabei sind die Anlenkpunkte des längenvariablen Elements 138 von dem ersten Gelenk 134 bzw. der ersten Gelenkachse 151 beabstandet. Derart bedingt eine Drehung des ersten Auslegerarms 132 relativ zum Grundelement 131 um die erste Gelenkachse 151 eine Längenänderung des Teleskopelements 138. Auf analoge Weise ist der zweite Auslegerarm 133 mittels eines als Teleskopelement ausgeführten längenvariablen Elements 139 mit dem ersten Auslegerarm 132 gekoppelt. Dabei sind die Anlenkpunkte des längenvariablen Elements 139 von dem zweiten Gelenk 135 bzw. der zweiten Gelenkachse 152 beabstandet. Derart bedingt eine Drehung des zweiten Auslegerarms 133 relativ zum ersten Auslegerarm 132 um die zweite Gelenkachse 152 eine Längenänderung des Teleskopelements 139. Es kann vorgesehen sein, dass die Längenvariabilität der Teleskopelemente 138 und 139 selektiv festsetzbar und lösbar ist. Dabei ist insbesondere vorgesehen, dass die Teleskopelemente 138 und 139 in einem unbetätigten Zustand hinsichtlich ihrer Länge festgesetzt, also blockiert sind, und somit die Drehbarkeit um die Achsen 151 und 152 festsetzen. Somit ist eine einmal durch Verschwenken der Auslegerarme 132 und 133 eingestellte Position der Bediener-Armatureneinheit 125 sicher festgelegt. Weiterhin ist an der Halterungsvorrichtung 136 ein nicht näher dargestelltes, dem Fachmann aber ohne Weiteres geläufiges, Bedienelement angeordnet, das über einen ebenfalls nicht dargestellten Betätigungsmechanismus mit den Teleskopelementen in Wirkverbindung steht. Das Bedienelement und der Betätigungsmechanismus sind aus Gründen der Übersichtlichkeit nicht dargestellt; deren Aufbau erschliesst sich dem Fachmann aber im Lichte der folgenden Beschreibung ohne weiteres. Das Bedienelement ist beispielsweise ein Griff, der durch Heranziehen zum Bediener die Längenvariabilität beider Teleskopelemente 138 und 139 gleichzeitig freigibt. Dazu steht das Bedienelement über einen Betätigungsmechanismus mit den Teleskopelementen, bzw. mit Freigabe- und Sperrmechanismen zum Festsetzen und Lösen der Längenvariabilität der Teleskopelemente in einer Wirkverbindung. Die Wirkverbindung wird beispielsweise über Seilzüge, eine hydraulische Kraftübertragungseinrichtung, elektromechanisch oder dergleichen hergestellt, derart, dass beim Betätigen des Bedienelements die Längenvariabilität der Teleskopelemente 138 und 139 gleichzeitig freigegeben wird, wodurch eine Verstellung der Positioniervorrichtung ermöglicht ist. Die Freigabe- und Sperrmechanismen sind derart ausgestaltet, dass sie in einem unbetätigten Zustand selbsttätig in einen Sperrzustand zurückkehren. Beim Loslassen des Bedienelements kehrt der Freigabe- und Sperrmechanismus jedes der Teleskopelemente daher wieder in einen gesperrten Zustand zurück, womit die einmal eingestellte Position verriegelt ist. In einer beispielhaften Ausführungsform steht das Bedienelement mittels zwei Bowdenzügen oder eines gegabelten Bowdenzuges mit den Freigabe- und Sperrmechanismen der Teleskopelemente in Verbindung. In einer anderen beispielhaft zu nennenden Ausführungsform sind an den Teleskopelementen Hydraulikzylinder angeordnet, über die die Freigabe- und Sperrmechanismen der Teleskopelemente bedienbar sind. Am Bedienelement ist in diesem Falle entweder ein Hydraulikzylinder angeordnet, der durch Hydraulikleitungen mit den Hydraulikzylindern der Teleskopelemente verbunden ist, oder es sind zwei Hydraulikzylinder angeordnet, von denen jeder über eine Hydraulikleitung mit einem Hydraulikzylinder an einem Teleskopelement verbunden ist. Ein Hydraulikzylinder am Bedienelement wird bei Betätigen des Bedienelements aktiviert, und über die hydraulische Kopplung wird ein Hydraulikzylinder an einem Teleskopelement aktiviert und so die Längenvariabilität des Teleskopelements freigegeben. Ebenso kann auf vollkommen analoge Weise ein Bedienelement vorgesehen sein, über welches ein Freiheitsgrad um die Kippachse 154 und damit die Verschwenkbarkeit der Bediener-Armatureneinheit in der mit 155 bezeichneten Richtung sperrbar respektive entsperrbar ist.

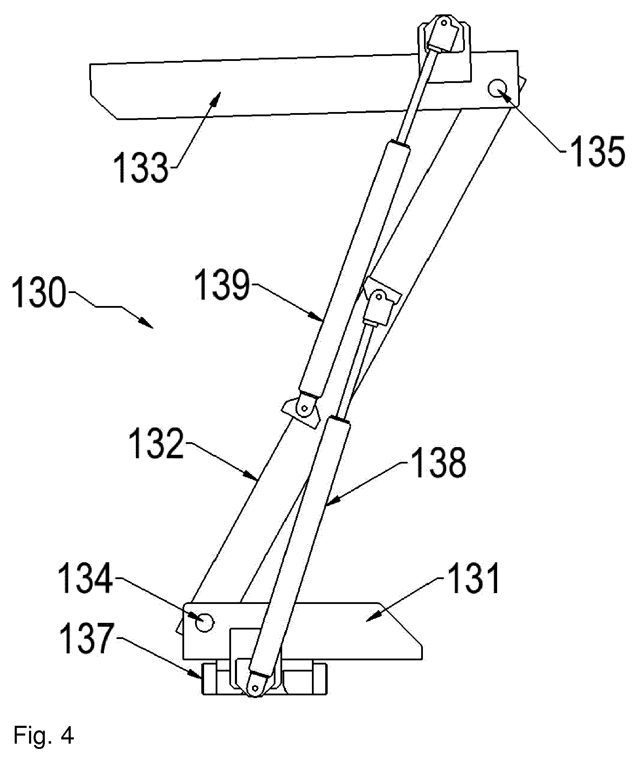

Figur 4 zeigt eine Detailansicht der Positionierungsvorrichtung 130. Am Grundelement 131 ist ein geeignetes Linearlagerelement, beispielsweise ein Kugelumlaufschlitten 137, angeordnet. Mittels des Linearlagerelements 137 ist die Positioniervorrichtung 130 transversal verschieblich an der Quertraverse gelagert. Das erste Gelenk 134 ist an einer ersten Gelenkposition des ersten Auslegerarms 132 angeordnet. Das zweite Gelenk 135 ist an einer zweiten Gelenkposition des ersten Auslegerarms 132 angeordnet. Der erste Auslegerarm 132 ist, wie beschrieben, mit dem Grundelement über ein längenvariables Teleskopelement 138 gekoppelt, wobei die Anlenkpunkte des Teleskopelements am Grundelement und am ersten Auslegerarm von der Gelenkposition des ersten Gelenks 134 beabstandet sind. Eine Drehbewegung des ersten Auslegerarms 132 um das erste Gelenk 134 bedingt somit eine Längenänderung des teleskopartigen Elements 138. Der erste Auslegerarm 132 und der zweite Auslegerarm 133 sind, wie beschrieben, über ein weiteres längenvariables Teleskopelement 139 gekoppelt. Die Anlenkpunkte des Teleskopelements 139 am ersten und am zweiten Auslegerarm sind von der Gelenkposition des zweiten Gelenks 135 beabstandet. Eine Drehbewegung des zweiten Auslegerarms 133 um das zweite Gelenk 135 bedingt somit eine Längenänderung des Teleskopelements 139. Es kann, wie oben dargelegt, vorgesehen sein, dass die Längenvariabilität der Teleskopelemente 138 und 139 blockierbar ist. Auf diese Weise können die Drehfreiheitsgrade um die Gelenke 134 und 135 festgesetzt werden. Insbesondere kann eine Betätigungsanordnung vorgesehen sein, über welche die Längenvariabilität beider Teleskopelemente 138 und 139 gleichzeitig festsetzbar oder lösbar ist. Dabei kann vorgesehen sein, dass die Betätigungsanordnung derart ausgestaltet ist, dass in einem passiven, unbetätigten Zustand die Längenvariabilität beider Teleskopelemente blockiert ist. Beim Betätigen eines entsprechend vorgesehenen Betätigungselementes wird diese Blockierung gelöst, und somit werden die Drehfreiheitsgrade um die Gelenke 134 und 135 gleichzeitig freigegeben. Somit ist eine eingestellte Position der Bediener-Armatureneinheit in einem unbetätigten Zustand festgelegt, und kann durch Betätigen eines Betätigungselementes, welches über die Betätigungsanordnung die Blockierung der Teleskopelemente freigibt, verstellt werden.

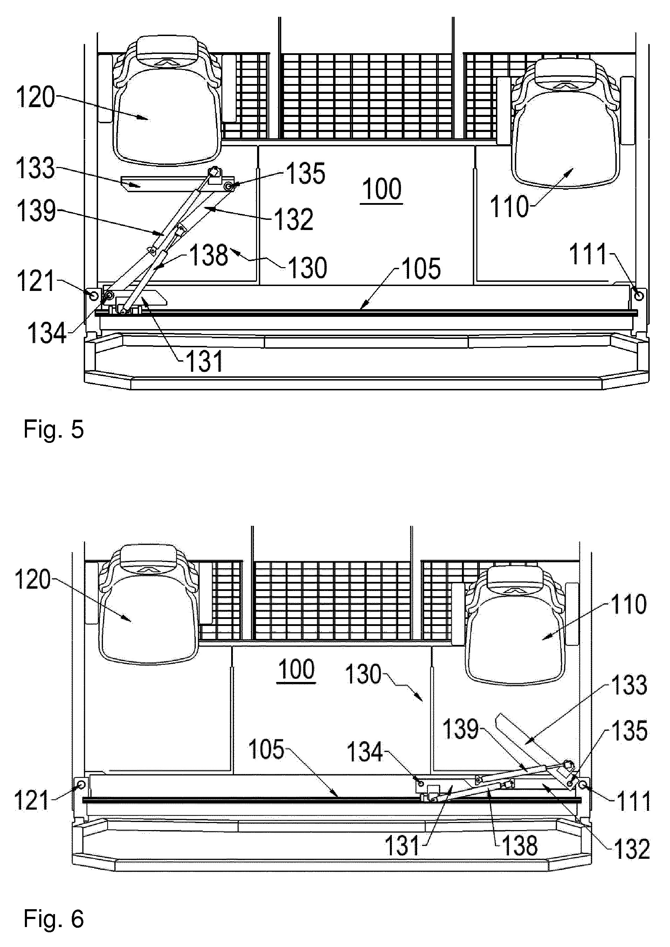

Die Figur 5 zeigt eine Draufsicht auf den Führerstand 100 eines Strassenfertigers oder Beschickers, oder einer anderen selbstfahrenden Maschine der eingangs genannten Art, wobei die vorliegend nicht dargestellte Bediener-Armatureneinheit vor dem rechten Bedienerplatz angeordnet ist. Das Grundelement 131 der Positioniervorrichtung 130 befindet sich in seiner am weitesten rechts liegenden Position an der Quertraverse 105, und ist dort insbesondere festgelegt. Es ist erkennbar, dass bei dieser Anordnung die Gelenkachse des ersten Gelenks 134 der Positioniervorrichtung 130 mit dem Drehpunkt 121 des rechten Bedienerplatzes zumindest näherungsweise zusammenfällt. Derart erfolgt eine Schwenkbewegung des ersten Auslegerarms 132 zumindest im Wesentlichen konzentrisch zu einer Schwenkbewegung des Bedienerplatzes 120.

In der Darstellung der Figur 6 ist die Bediener-Armatureneinheit vor dem linken Bedienerplatz 110 angeordnet. Das Grundelement 131 befindet sich in seiner am weitesten links liegenden Position an der Quertraverse 105, und ist dort insbesondere festgelegt. Die Gelenkachse des zweiten Gelenks 135 der Positioniervorrichtung 130 befindet sich zumindest näherungsweise in Deckung mit der Drehachse 111 des linken Bedienerplatz ist 110. Derart erfolgt eine Schwenkbewegung des zweiten Auslegerarms 133 zumindest im Wesentlichen konzentrisch zu einer Schwenkbewegung des Bedienerplatzes.

Obschon der Gegenstand der vorliegenden Beschreibung anhand ausgewählter Ausführungsbeispiele erläutert wurde, sollen diese nicht einer Einschränkung der beanspruchten Erfindung dienen. Die Ansprüche umfassen Ausführungsformen, die nicht explizit dargestellt sind, und Ausführungsformen, die von den gezeigten Beispielen abweichen, sind dennoch von den Ansprüchen gedeckt.

### BEZUGSZEICHENLISTE

- 1: selbstfahrende Maschine zum Fördern und/oder zum Einbau eines Belagsmaterials, Strassenfertiger, Beschicker
- 2: Arbeitsrichtung, Vorwärtsfahrtrichtung
- 10: Zugmaschine
- 11: Zugarme
- 20: Bohle
- 100: Führerstand
- 105: Quertraverse
- 110: linker Bedienerplatz
- 111: Schwenkachse oder Drehachse des linken Bedienerplatzes
- 112: Position einer Bediener-Armatureneinheit vor dem linken Bedienerplatz
- 120: rechter Bedienerplatz
- 121: Schwenkachse oder Drehachse des rechten Bedienerplatzes
- 122: Position einer Bediener-Armatureneinheit vor dem rechten Bedienerplatz
- 125: Bediener-Armatureneinheit
- 130: Positionierungsvorrichtung
- 131: Grundelement
- 132: erster Auslegerarm
- 133: zweiter Auslegerarm
- 134: erstes Gelenk
- 135: zweites Gelenk
- 136: Halterungsvorrichtung
- 137: Linearlagerelement, Kugelumlaufschlitten
- 138: längenvariables Element, Teleskopelement
- 139: längenvariables Element, Teleskopelement
- 151: erste Gelenkachse
- 152: zweite Gelenkachse
- 154: Kippachse
- 155: Kippbewegung

## Patentansprüche

1. Selbstfahrende Maschine (1) zum Fördern und/oder zum Einbau eines Belagsmaterials, umfassend eine verstellbare Positioniervorrichtung (130) für eine Bediener-Armatureneinheit (125), wobei die Positioniervorrichtung wenigstens ein Grundelement (131) und wenigstens zwei Auslegerarme (132, 133) umfasst, wobei ein erster Auslegerarm (132) zwei Gelenkpositionen aufweist, die voneinander beabstandet sind, und wobei der erste Auslegerarm an einer ersten Gelenkposition an dem Grundelement angelenkt ist, wobei ein zweiter Auslegerarm (133) an der zweiten Gelenkposition des ersten Auslegerarms an dem ersten Auslegerarm angelenkt ist, derart, dass der erste Auslegerarm relativ zu dem Grundelement um wenigstens eine erste Gelenkachse (151) schwenkbar ist und der zweite Auslegerarm relativ zu dem ersten Auslegerarm um wenigstens eine zweite Gelenkachse (152) schwenkbar ist.

2. Selbstfahrende Maschine gemäss Anspruch 1, wobei das Grundelement quer zu einer Fahrtrichtung (2) der selbstfahrenden Maschine verschieblich angeordnet und gelagert ist.

3. Selbstfahrende Maschine gemäss dem vorstehenden Anspruch, wobei das Grundelement (131) an einer Quertraverse (105) eines Führerstandes (100) der selbstfahrenden Maschine gelagert ist.

4. Selbstfahrende Maschine gemäss einem der vorstehenden Ansprüche, wobei die erste und die zweite Gelenkachse (151, 152) wenigstens näherungsweise parallel zueinander angeordnet sind.

5. Selbstfahrende Maschine gemäss einem der vorstehenden Ansprüche, wobei wenigstens eine der ersten und zweiten Gelenkachsen (151, 152) zumindest näherungsweise senkrecht angeordnet ist.

6. Selbstfahrende Maschine gemäss einem der vorstehenden Ansprüche, wobei an dem zweiten Auslegerarm (133) eine Halterungsvorrichtung (136) für eine Bediener-Armatureneinheit angeordnet ist.

7. Selbstfahrende Maschine gemäss einem der beiden vorstehenden Ansprüche, wobei die Halterungsvorrichtung (136) ein Gelenk umfasst, das eine Verschwenkung einer darauf angeordneten Bediener-Armatureneinheit um eine Kippachse (154) ermöglicht, die insbesondere wenigstens näherungsweise senkrecht zu der zweiten Gelenkachse (152) angeordnet ist, um die der zweite Auslegerarm (133) relativ zu dem ersten Auslegerarm (132) verschwenkbar ist.

8. Selbstfahrende Maschine gemäss dem vorstehenden Anspruch, wobei ein Drehfreiheitsgrad um die Kippachse (154) wahlweise festsetzbar und lösbar ist.

9. Selbstfahrende Maschine gemäss einem der vorstehenden Ansprüche, wobei die Gelenke (134, 135) als Gelenke mit je genau einer Gelenkachse ausgeführt sind.

10. Selbstfahrende Maschine gemäss einem der vorstehenden Ansprüche, wobei wenigstens ein Drehfreiheitsgrad um die erste Gelenkachse (151) und ein Drehfreiheitsgrad um die zweite Gelenkachse (152) wahlweise festsetzbar und lösbar ist.

11. Selbstfahrende Maschine gemäss dem vorstehenden Anspruch, wobei das Grundelement (131) und der erste Auslegerarm (132) sowie der erste Auslegerarm (132) und der zweite Auslegerarm (133) jeweils mittels wenigstens eines längenvariablen Elementes (138, 139) miteinander gekoppelt sind, wobei ein Anlenkpunkt wenigstens eines ersten längenvariablen Elements (138) an dem Grundelement von einem Anlenkpunkt des ersten Auslegerarms am Grundelement beabstandet ist, ein Anlenkpunkt wenigstens eines zweiten längenvariablen Elements (139) an dem ersten Auslegerarm von der zweiten Gelenkposition des ersten Auslegerarms beabstandet ist, und wobei insbesondere die Länge wenigstens eines der längenvariablen Elemente festsetzbar ist.

12. Positioniervorrichtung (130) für eine Bediener-Armatureneinheit an einer selbstfahrenden Maschine zum Fördern und/oder zum Einbau eines Belagsmaterials, welche gemäss der eine Positioniervorrichtung betreffenden Merkmale eines der vorstehenden Ansprüche ausgeführt ist.

13. Positioniervorrichtung (130) für eine Bediener-Armatureneinheit (125) einer selbstfahrenden Maschine (1) zum Fördern und/oder zum Einbau eines Belagsmaterials, umfassend
eine Traverse (105),
ein Grundelement (131),
einen ersten Auslegerarm (132),
einen zweiten Auslegerarm (133),
eine Halterungsvorrichtung (136),
wobei
das Grundelement translatorisch verschiebbar an der Traverse angeordnet und gelagert ist,
der erste Auslegerarm um eine erste Gelenkachse (151) drehbar an dem Grundelement angeordnet und gelagert ist,
der zweite Auslegerarm um eine zweite Gelenkachse (152) drehbar an dem ersten Auslegerarm angeordnet und gelagert ist, und
die Halterungsvorrichtung von der zweiten Gelenkachse beabstandet an dem zweiten Auslegerarm angeordnet ist.

14. Positioniervorrichtung gemäss dem vorstehenden Anspruch, wobei die Halterungsvorrichtung (136) bereitgestellt ist, um eine Bediener-Armatureneinheit (125) aufzunehmen, und weiterhin eine Kippbewegung (155) der Bediener-Armatureneinheit um eine Kippachse (154) zu ermöglichen, die wenigstens näherungsweise senkrecht zu wenigstens einer der ersten und zweiten Gelenkachsen (151, 152) angeordnet ist.

15. Positioniervorrichtung gemäss einem der beiden vorstehenden Ansprüche, wobei wenigstens die Drehbarkeit um die erste und die zweite Gelenkachse festsetzbar sind.
